# EUROPEAN PATENT SPECIFICATION

(11) **EP 3 889 753 B1**
(45) Date of publication and mention of the grant of the patent: **07.05.2025**
(21) Application number: 20166890.2
(22) Date of filing: 30.03.2020
(51) Int. Cl.: G06F 3/06

(54) **DATA MIGRATION**
DATENMIGRATION
MIGRATION DE DONNÉES

(43) Date of publication of application: 06.10.2021
(73) Proprietor: Datadobi bv, 3012 Wilsele (BE)
(72) Inventor: Marivoet, Kim, 3360 Lovenjoel (BE); Aerts, Ives, 3001 Heverlee (BE); Van Eeckhoudt, Pepijn, 3010 Kessel-Lo (BE)
(74) Representative: IP HILLS NV

(56) References cited:
- EP-A1- 2 996 025
- US-A1- 2012 278 553

## Description

### Technical Field

Various example embodiments relate to data migration of data items from a source storage system to a destination storage system.

### Background

The need for data storage capacity is increasing rapidly every year. Today, a company's storage system may be distributed over different locations and comprise multiple server racks in one or multiple data centres where each rack houses multiple storage servers. Some companies outsource their storage needs to external storage providers offering cloud-based storage solutions.

At some point in time, it may be decided to migrate data from a current storage system to a new one. This decision may be driven by several factors, but in any case, a data migration is to be performed, i.e., all data items on the source system needs to be copied to the destination system and, at some point in time, users need to be switched to the new destination system.

For large storage systems serving tens of Terabytes up to several Petabytes of data, a single copy of all data may take in the order of days, weeks or even months. Denying user access to the storage system for such a long time is simply unacceptable and, therefore, the data migration is typically performed in different steps. First, an initial or baseline synchronization is performed between the source to the destination system. Then, one or more incremental or intermediate synchronizations are performed. An incremental synchronization only considers differences between the source and destination system. During the initial and incremental synchronizations, the users may still be allowed access to the source storage system such that there is no interruption of business. Then, at a certain planned point in time, the actual cutover or switchover is performed. During the cutover, the users are denied access from the storage systems or have read-only access and a last or cutover synchronizations is performed. When the final synchronization and all necessary checks are done, the users are switched to the new destination storage system and can again access their migrated data.

To perform a synchronization from source to destination, being initial, incremental or cutover, both source and destination are first scanned thereby obtaining a listing of data items together with some parameters such as size and timestamps. Then, the scan results are compared. From this comparison, a list of commands is generated to synchronize the destination storage system with the source storage system. Such commands may for example comprise a copy of a data item from source to destination, a deletion of a data item at the destination, an update of metadata of a data item at the destination. Several commands may be issued sequentially to synchronize a data item. For example, first a digest of a data item on both source and destination is made, then the digests are compared and, depending on the outcome, a copy of the data item is made.

EP2996025A1 discloses a method for migrating data from a source storage system to a destination storage system comprising the following steps: in a first step, an initial copy is performed; in a second step, one or more incremental copies are performed and then a final cutover incremental copy is performed; the performing the one or more incremental copies further comprise excluding from a respective one of the one or more incremental copies first data portions of the data that are likely to change before this performing a final cutover incremental copy.

It is still beneficial to further reduce the amount of generated commands, because each command takes an amount of time and, thus, increases the time of the synchronization and, hence the total time of the data migration. Further, the final stage or switchover can take still take very long due to final checks between source and destination and due to making digests of all copied data for reporting purpose.

### Summary

The scope of protection sought for various embodiments of the invention is set out by the independent claims.

The embodiments and features described in this specification that do not fall within the scope of the independent claims, if any, are to be interpreted as examples useful for understanding various embodiments of the invention.

Amongst others, it is an object of embodiments of the invention to alleviate the above-identified problems and provide a solution for performing a data migration that is faster, is more reliable and has a shorter final cutover time.

This object is achieved, according to a first example aspect of the present disclosure, by a computer-implemented method performed while performing a data migration from a source storage system to a destination storage system. The method comprises performing an initial synchronization, at least one intermediate incremental synchronization, and a final cutover synchronization of data items; the initial synchronization comprising:
- scanning the source and destination storage system thereby obtaining an initial source and destination data item list;
- generating commands for performing the initial synchronization based on the scanning;
- executing the commands;
- obtaining results of the executed commands; and
- creating and storing status records of the respective data items indicative for the synchronization state of the respective data items based on the results;
and each of the at least one intermediate incremental synchronizations and the final cutover synchronization comprising:
- scanning the source and destination storage system thereby obtaining the source and destination data item list;
- retrieving the stored status records of the respective data items indicative for the last known synchronization state of the respective data items;
- generating commands for performing the intermediate incremental synchronization based on the source and destination data item list and the status records;
- executing the commands;
- obtaining results of the executed commands as a result list;
- determining, from the result list, a merge list comprising updates for the status records; and
- updating the status records based on the merge list.

In other words, the data migration is not a sequence of independent synchronization steps that are each time based on a mere scanning the source and destination. Instead, a state is maintained in between the synchronisation steps. This way, a synchronization is not only based on the current state of a data item on the source and/or destination, but also on its last known state, i.e. the state as obtained by the previous synchronization. In order to maintain the state for the next synchronization, the state of a data item is updated after the execution of a command on that data item.

By such status records, there is more information available for generating the commands. Therefore, situations that would normally trigger a command such as taking a digest, reading or modifying metadata or even taking a full copy of a data item may now be avoided. Moreover, keeping a status record also allows to detect tampering events in the destination in between the synchronizations by comparing the status record with the destination scan. This makes the migration more reliable and traceable. All this results in a shorter synchronization time and a shorter overall migration. The same benefits apply to the final synchronization or switchover which will also be shorter. Further, the status records avoid the need for additional integrity verification during the final switchover.

By the updating of the status records the size of the records is kept constant and the amount of status records is proportional to the amount of data items. This way, the solution scales linearly for larger data migrations.

According to an embodiment, the status record of a data item comprises a source change timestamp indicative of a moment in time on which the data item was last changed on the source storage system; and a destination change timestamp indicative of a moment in time on which the data item was last changed on the destination storage system.

A change timestamp associated with a data item is updated to the current time every time the data item is modified. Therefore, by recording such change timestamp in the status record, a good indicator for a change in a data item is obtained without the need for comparing the data item's content or metadata. Further, even when a data item is modified on the destination outside the data migration, the change timestamp will change and, hence, can still be detected.

This change timestamp may then further be used during the generation of the commands by comparing the change timestamps from the data record with the change timestamps obtained from the source and destination data item list.

According to an embodiment, the status record of a data item comprises at least one of: a message digest of the data item; a size of the data item; a type of the data item; an owner of the data item; access permissions of the data item; retention information of the data item; and a path or key to the data item.

All this information typically becomes available during the performing of a synchronization command. Therefore, storing this information in the status record is not an intensive operation. But, during a next operation, having this information available may save the execution of the same command for obtaining this same information.

The status record of a data item may further comprise a synchronization status selectable from a group comprising: a first status option indicative of a valid synchronization of the respective data item; and a second status option indicative of a synchronization mismatch of the respective data item.

Also the reason for the synchronization mismatch may be described in the status record, for example because the data item is deliberately excluded from the data migration.

After a synchronization, data items may still be unsynchronized for various reasons. By indicating such synchronization mismatch in the status record, further unnecessary attempts for synchronizing such items may be avoided, depending on the specific reason of the mismatch which may also be specified in the status record.

The status records are created during the initial or base synchronization of the data items by:
- scanning the source storage system thereby obtaining an initial destination data item list;
- generating commands for performing the initial synchronization based on the scanning;
- executing the commands;
- obtaining results of the executed commands; and
- creating the status records based on the results.

According to an embodiment, the destination storage system already comprises data items before the data migration. Performing the initial synchronization then further comprises:
- scanning the source and destination storage system thereby obtaining an initial source and initial destination data item list;
- generating (403) commands (404) for performing the initial synchronization based on the scanning;
- executing the commands;
- obtaining results of the executed commands; and
- creating the status records with the results.

By the status records, a bootstrapping of a data migration is possible, for example when the destination system already comprises data items that were copied during another migration attempt. By the status records it may be detected that a data item that is already on the destination is not migrated. If it wasn't migrated, then the state of that data item is unknown. Therefore, a command may be generated that will compare the data item on source and destination, and, if there is a difference, recopy it. If the data item is the same, an up-to-date status record may be created. By not copying data items that are already on the destination but only updating the status records considerable time savings can be made.

According to an embodiment, the final cutover synchronization of data items is performed thereby obtaining final status records.

The cutover synchronization or switchover is a final synchronization wherein the state of the source storage system is considered frozen, i.e. data items will no longer be changed. By updating the status records during the switchover, the final status records will automatically reflect the outcome or status of the complete data migration. With these final status records, a verification step of the data migration may be avoided because all information that is normally obtained by such verification is already present in the data records. A considerable time saving is achieved because a comparison between the source and destination storage system is no longer needed.

According to an embodiment the method further comprises:
- obtaining information for protecting one or more of the data items by a write once read many, WORM, state;
- applying the WORM state to the one or more of the data items on the destination storage system based on the final status records and the data item lists obtained during final cutover synchronization.

Data storage system may support such WORM states for a data item for legal reasons, e.g. when certain data items must be retained for a certain period of time. As the data item becomes unalterable when applying the WORM state, mistakes must be avoided at all cost during a migration. Therefore, the WORM states are only applied near the end of the migration after applying the cutover synchronization. As the final status records already provide all the information needed for verifying WORM data items, the WORM commit is based on these final records. Based on the change timestamps, the integrity of the migrated data items can be assured.

According to a second example aspect, the disclosure relates to a controller comprising at least one processor and at least one memory including computer program code, the at least one memory and computer program code configured to, with the at least one processor, cause the controller to perform the method according the first example aspect.

According to a third example aspect, the disclosure relates to a computer program product comprising computer-executable instructions for causing an apparatus to perform at least the method according to the first example aspect.

According to a fourth example aspect, the disclosure relates to a computer readable storage medium comprising computer-executable instructions for performing the method according to the first example aspect when the program is run on a computer.

### Brief Description of the Drawings

Some example embodiments will now be described with reference to the accompanying drawings.
Fig. 1 shows a source and destination storage system connected over a computer network according to an example embodiment;
Fig. 2 shows steps for performing a synchronization from a source to a destination storage system according to an example embodiment;
Fig. 3 shows a plot illustrating the data size and duration when performing synchronizations between a source and destination storage system according to an example embodiment;
Fig. 4 shows steps for performing a data migration between a source and destination storage system according to an example embodiment; and
Fig. 5 shows steps for generating commands for performing a synchronization from a source to a destination storage system according to an example embodiment
Fig. 6 shows steps for performing a REPAIR command where performing a synchronization from a source to a destination storage system according to an example embodiment; and
Fig. 7 shows an example embodiment of a suitable computing system for performing one or several steps according to embodiments of the invention.

### Detailed Description of Embodiment(s)

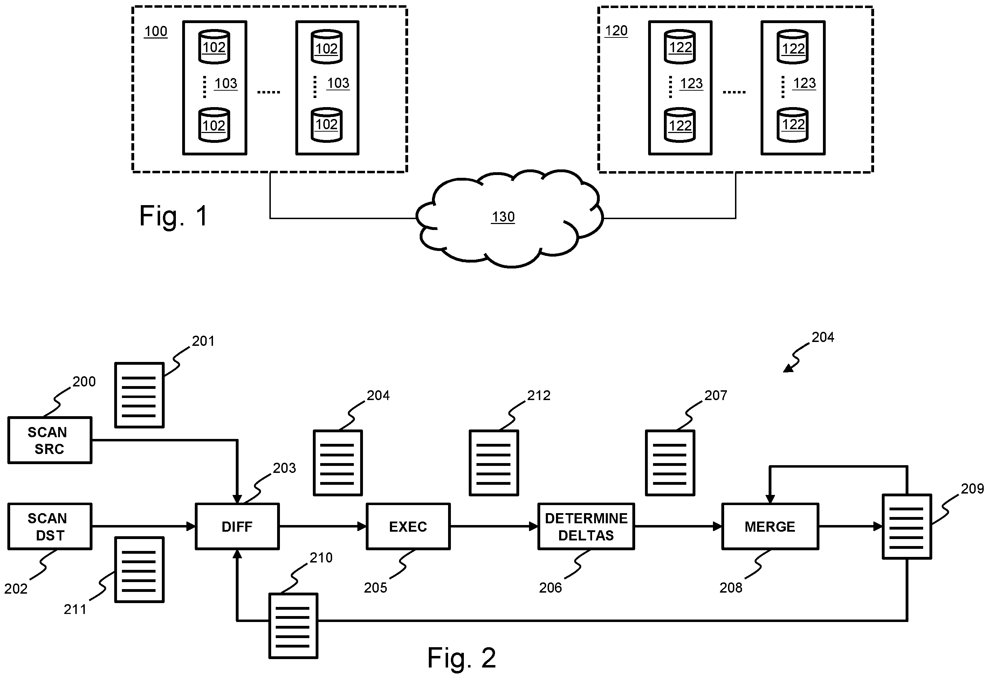

The current disclosure relates to data migration between data storage systems and more particular the data migration from a source storage system to a destination storage system. Fig. 1 illustrates an exemplary embodiment of such a source 100 and destination 120 storage systems. The source storage system 100 comprises a plurality of storage servers 103 each housing one or more digital storage means 102. Similarly, the destination system comprises a plurality of storage servers 123 each housing one or more digital storage means 122. The storage servers 103 and 123 may be housed in a same or different data centre inside or outside a company's data network. The storage systems 100 and 120 can offer data storage and access to users and services. Such access may be done over the network 130, e.g. the Internet or a private network. The data to be migrated from the system 100 to the system 120 typically comprises a set of data items that are individually accessible by a remote access protocol.

A data item may for example correspond to a file system item such as a file or a directory within a hierarchical or structured file system. Various protocols may be used for accessing such file system items such as for example the Apple Filing Protocol (AFP), the Web Distributed Authoring and Versioning (WebDAV) protocol, the Server Message Block (SMB) protocol, the Common Internet File System (CIFS) protocol, the File Transfer Protocol (FTP), the Network File System (NFS) and the SSH file transfer protocol (SFTP).

A data item may for example correspond to an object of an object addressable storage system. Such an object comprises a key and a value wherein the key serves as a unique identifier of the value which holds the actual data that is stored. Data can be retrieved from an object addressable storage system by providing the unique identifier upon which the associate data, i.e. value, is returned. Because of the key-value storage, an object addressable storage system stores data in an unstructured manner as opposed to for example a file system. The object addressable storage system may be a cloud based object addressable storage system that is interfaceable by a pre-defined application programming interface (API) over a computer network such as the Internet. An example of a cloud based object addressable storage system is Amazon S3 or Amazon Simple Storage Service as offered by Amazon Web Services (AWS) that provides such object addressable storage through a web-based API. Another example is Google Cloud Storage offered by Google providing RESTful object storage on the Google Cloud Platform infrastructure.

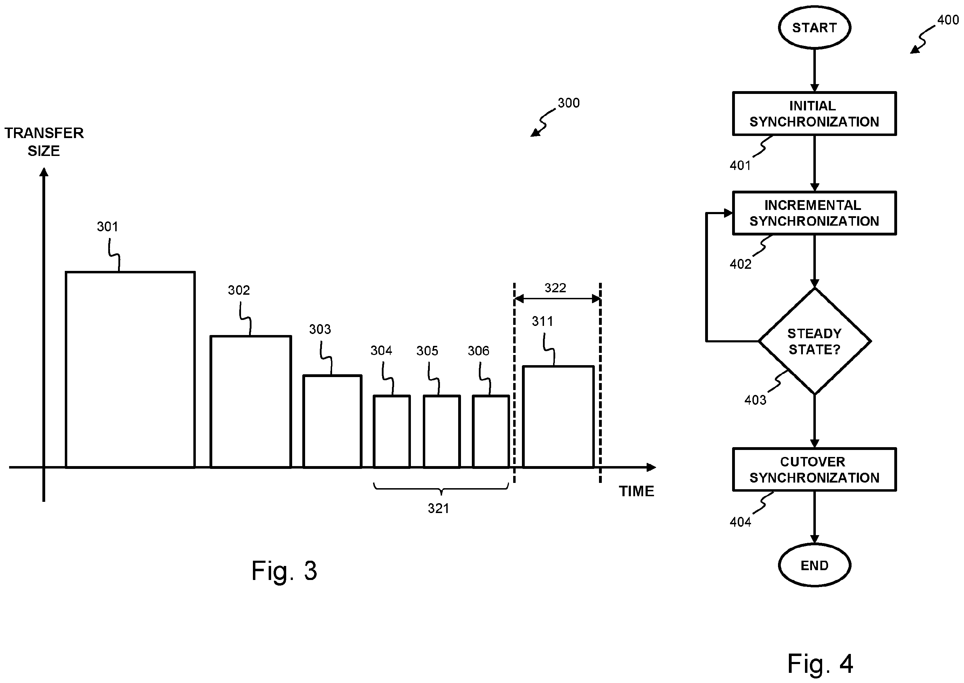

Fig. 4 illustrates steps for performing a data migration 400 from a source storage system 100 to a destination storage system 120 according to an example embodiment. The steps are further illustrated with reference to the plot 300 in Fig. 3 where the transfer size and transfer duration of a synchronization 301-311 from the source storage system 100 to the destination storage system 120 are illustrated. The transfer size is then the amount of data that is transferred from source to destination while the transfer time is the amount of time it takes to perform the synchronization.

At some point in time, a data migration is started. Before and during the migration data storage may still be provided from the source data storage system to users. During the migration the destination storage system is populated with copies of the data items. At the end of the migration, during the cutover or switchover, all user access is denied to both source and destination storage systems or the users have read-only access to the source storage system and the remaining unsynchronized data items are synchronized to the destination storage system. Then, all users are given access to the destination storage while the source storage system can be decommissioned. By the cutover during which access is denied, data integrity is guaranteed.

In a first step 401 an initial synchronization is performed. In Fig. 3 this initial synchronization is illustrated by the block 301 where its width represents the time it takes to perform the initial synchronization and its height represents the data size of the transfer between source and destination. For typical large data migrations, such an initial copy may take several days, weeks or even months. Apart from the size of the data, the transfer time will also be restricted by the available bandwidth for transferring the data between the source 100 and destination 120.

The initial synchronization 301 may comprise a copy of all data item on the source to the destination. In the first step 401 all data items making up the data are thus copied from the source storage system 100 to the destination storage system 120. Data items that are likely to change before the cutover may also be excluded from the initial synchronization 301. As the data items are still likely to change, a new copy will anyhow have to be made before or during the cutover. Therefore, by excluding such a data portions from the initial copy, the initial copy will take less time to perform and network bandwidth is saved.

After performing the initial synchronization in step 401, one or more incremental synchronizations 302 to 306 are made until the start of the actual cutover. During an incremental synchronization differences between the source and destination system 100 and 120 are identified. These differences are then translated to commands such that the destination is again synchronized with the source. In Fig. 3, the first incremental synchronization is illustrated by block 302. If a data item on the source has already a copy on the destination that was copied there during the initial copy 301 and was further left untouched, then the data item is not copied during the incremental synchronization. Therefore, the size of the incremental synchronization 302 will be smaller than the initial copy 301 as it is unlikely that all data items on the source storage system will have changed. Moreover, data items that are likely to change before the cutover may further be excluded from the incremental synchronization 302.

The step 402 of performing the incremental synchronizations may be repeated several times until the cutover 404. Step 402 may be repeated at least until the transfer size of the incremental synchronizations has reached a steady state 403. In Fig. 3 the incremental copies 304, 305 and 306 have reached a steady state with regards to their transfer size.

Then, in step 404, the actual cutover synchronization 311 is performed during a certain maintenance window 322, preferably after the steady state 403 is reached. During this maintenance window 322, all access to the data is denied or only read-only access is granted and a final cutover synchronization 311 is performed.

Fig. 2 illustrates steps for performing a synchronization 204 between a source storage system 100 and a destination storage system 120 according to an example embodiment, for example for performing initial synchronization 401, an intermediate incremental synchronization 402 or a final cutover synchronization 404. A synchronization starts with performing a scan 200, 202 of the source and/or destination storage system thereby obtaining lists 201, 211 of data items on the source and destination, i.e., a source and destination file system data item list. Such a scan may be obtained by one or more listing commands executed on the source and destination storage system. Such a data item list at least uniquely identifies the data items on the storage system, allowing further handling or manipulation during the synchronization. For a file system item, the item list may comprise the file name, the file type, e.g. 'file', 'directory', and 'symbolic link', the file path, access permissions, the access timestamp, i.e. when the file item was last accessed, the modify timestamp, i.e. when the content was last changed, the change timestamp, i.e. when the file item's metadata was last changed, and the creation timestamp, i.e. when the file item was created. For an object of an object storage system, the item list may comprise the key value of the object, access permissions, the access timestamp, i.e. when the object was last accessed, the modify timestamp, i.e. when the data of the object was last changed, the change timestamp, i.e. when the object's metadata was last changed, and the creation timestamp, i.e. when the object item was created.

The synchronization 204 then proceeds to a next step 203 wherein the source and destination data item list 201, 211 is compared with status records 210. These status records are stored as a list or report 209 and comprise information on the synchronization of the data items, i.e. information on the last known synchronization state of the file system items. Based on the data item lists 201, 202 and the status records 210, a set of commands 204 is generated to perform the synchronization, i.e. commands that are to be executed on the source and/or destination storage system.

A status record in the status report 209 may comprise the following fields:
- a data item path;
- a synchronization status;
- stream name;
- a data item type;
- a data item size;
- a data item content digest;
- a source change timestamp at the moment the data item was last migrated to the destination;
- a destination change timestamp after the data item was migrated to the destination;
- information on the status;
- security permissions;
- owner information;
- retention information; and
- additional metadata associated with the data item.

The above example is applicable for file system items. Similar fields may be defined for data items in object storage systems. In some situations, one or more fields may be undefined. For example, a file system item that has 'directory' as data item type may have no size or content digest. The data item path is the unique identifier of the data item and may for example correspond to the file system path relative to the root of the migration, i.e. relative to the highest directory in the migration. The status field is indicative of the status of the data item as it was known when last synchronized. According to an embodiment, the status field may take any of the values as shown in Table 1 below.

**Table 1: Possible values for the status field**

| **Status** | **Description** |
|---|---|
| **IN_SYNC** | The data item is synchronized between source and destination. |
| **EXCLUDED** | The data item is present on the source but excluded from the migration scope and deleted from the destination. |
| **EXCLUDED AND RETAINED** | The data item is excluded from the migration scope, but not deleted from the destination. |
| **RETAINED** | The data item is present on the destination, but not on the source, and it was not deleted. |
| **OUT OF SYNC** | The data item was synchronized at a certain point in time, but the source changed and for some reason the change was not propagated to the destination. |
| **UNKNOWN** | The synchronization state of the data item is unknown. |

A data record may provide further additional information about the item depending on the status in the 'information' field. For data items that are OUT OF SYNC it may give the reason why the item is out of sync, for example the destination storage system does not allow a data item having a specific name, e.g. a very long name, or one using special characters. For data items that are UNKNOWN it may comprise the reason why the item status is unknown, for example because there was a scan error on the source storage system.

The data item type contains a value that defines the type of data item, for example 'FILE' for a file, 'DIRECTORY' for a directory, 'SYMBOLIC_LINK' for a symbolic link, 'PIPE' for named pipes, 'SOCKET' for a named Unix domain socket, 'BLOCK_DEVICE' for a block device file type that provides buffered access to hardware devices, 'CHAR_DEVICE' for a character special file or character device that provides unbuffered, direct access to a hardware device, and 'MOUNT_POINT' for a mount point or location in the storage system for accessing a partition of a storage device. The data item size corresponds to the number of bytes that would be returned when reading the data item from start to end. The data item content digest contains the digest of the content. To obtain a digest value, a hashing algorithm may be used. The hashing algorithm may then also be used to verify migrated content during the last cutover synchronization. Different algorithms may be used such as for example MD5, SHA-1, SHA-256 and SHA-512 generating respectively 32, 40, 64 and 128 character long digest values. Table 2 below shows an illustrative example of possible combinations of a data item type, data item size and data item content digest.

**Table 2: Different data item types and related data item size and data item content digest**

| **Data item type** | **Data item size** | **data item content digest** |
|---|---|---|
| Directory | | |
| File | Nr of bytes in file | Digest of file content |
| Alternate data stream (ADS) | Nr of bytes in ADS | Digest of ADS content |
| Named attribute | Nr of bytes in named attribute | Digest of named attribute content |
| Symbolic link | Nr of bytes in target path | Digest of target path (substitute name on Windows), converted to UTF-8.2 |
| Named pipe (FIFO) | | |
| Named unix domain socket | | |
| Block device file | | |
| Character device file | | |
| Mount point | | |

The change timestamp in both source and destination is useful because the data item is mutable during the migration at both the source and destination. The change timestamp identifies which version of the data item was copied from source to destination and further allows detecting any subsequent changes to the source or destination data item outside the scope of the migration, i.e. apart from the changes done by generated commands 204. In most file systems, the change timestamp is updated by the filesystem itself every time the data of the data item or metadata of the data item is altered. Moreover, this updating is performed automatically and cannot be set by a user or user program. Timestamps may be formatted in a standard, relatively compact and human readable ISO 8601 format with second, millisecond or nanosecond resolution, depending on the protocol used.

Based on the state records 210 and the scan results 200, 202 a list of commands 204 is generated that are to be executed in a next step 205. A command may be an action that is to be performed on the source or destination storage system, e.g. to delete a data item on the source and/or destination, to copy a date item from source to destination, to update metadata associated with a data item etc. A command may also be an action that does not directly change the status of the source or destination storage system, but that will update the status report 209 during a later step 208, i.e. update a status record of a data item.

Table 3 below shows different types of commands 204 that may be generated by step 203 according to an example embodiment.

**Table 3: Possible commands generated from scan results and status records.**

| **Command** | **Description** |
|---|---|
| COPY_NEW | Copy a data item from source to destination for the first time. |
| COPY | Update a data item that already exists on the destination. |
| COPY_METADATA | Only copy or update the metadata associated with a data item on the destination. |
| DELETE | Delete the data item. |
| REPAIR | Do everything necessary for synchronizing the data item from source to destination. |
| VERIFY | Verify the data item and report differences for that data item between source and destination. |
| COPY_WORM | Copies worm-related settings for the data item, e.g. the retention period and commit state. |
| REPORT_ERROR | Report an error so it can be propagated to the status list. |
| REPORT_EXCLUDED | Report a data item as excluded so it can be propagated to the status list. |

Then, in a next step 205, the list of generated commands 204 are executed. Besides the execution itself, this step also generates a result list 212. The results in the list 212 are then used in a next step 206 to determine a merge list 207, i.e. a list with updates for the status list 209. In a next merge step 208 the status list 209 is then updated based on this merge list 207. Table 4 below shows possible entries of merge list 207 depending on the executed command and the result of the command as both specified in the result list 212.

**Table 4 Possible commands generated from scan results and status records.**

| **Executed Command** | **Command result** | **Merge list entry** |
|---|---|---|
| COPY_NEW | SUCCESS | Create new status record |
| | SKIPPED | Data item is out of sync with the source |
| COPY | SUCCESS | Update status record |
| | SKIPPED | Data item is out of sync with the source |
| REPAIR | SUCCESS | Update status record |
| COPY_METADATA | SUCCESS | Update status record with metadata |
| | SKIPPED | Data item is out of sync with the source |
| COPY_WORM | SUCCESS | Update status records with WORM result |
| DELETE | SKIPPED | Data item is retained |
| | SUCCESS | Delete the status record |

| REPORT_EXCLUDED | | Data item is excluded |
|---|---|---|
| <any> | FAILURE | Unknown |

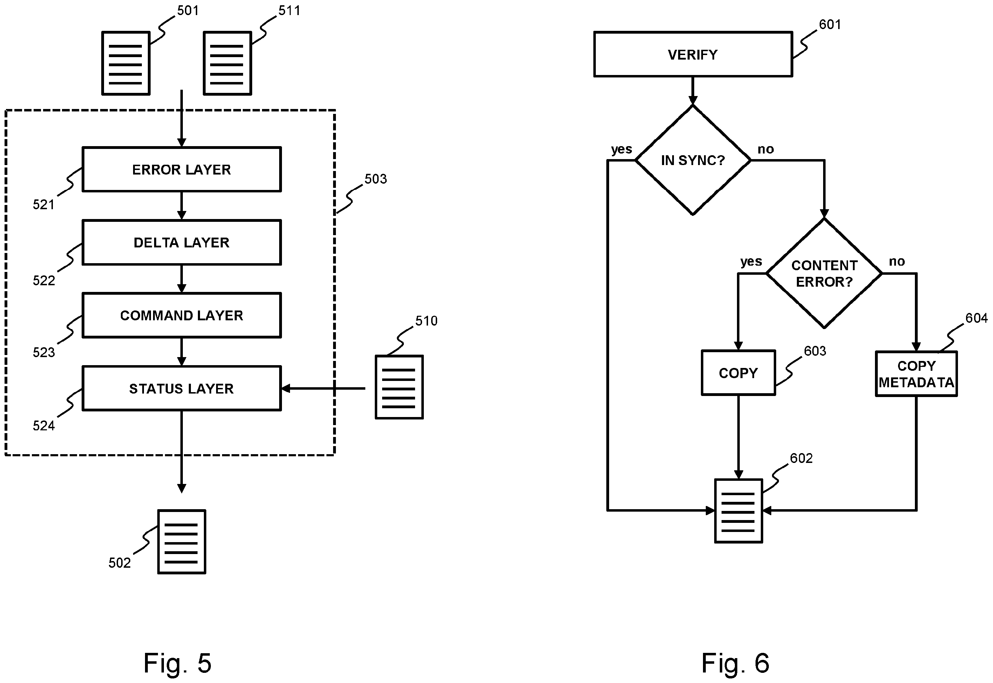

Fig. 5 illustrates further steps 521-524 performed for generating the commands of step 203 according to an example embodiment. In a first step 521 the scan results 501 and 511 are scanned for errors and a REPORT_ERROR command is generated for a detected error in the scan results. Then, the method proceeds to step 522 wherein the differences between the source and destination scan results 501, 511 are identified. The following differences may for example be identified in step 522:
- The data item is present on source and destination and is the same based on the scan results 501, 511;
- The data item is present on source and destination but the metadata associated with the data item is different;
- The data item is present on source and destination, but the content of the data item is different;
- The data item is present on source and destination, but the type is different;
- The data item is only present on the source storage system;
- The data item is excluded on the source, but not present on the destination;
- The data item is absent on the source and present on the destination;
- The data item is absent on source and excluded on the destination.
This first classification is only based on the scan results 501, 511 and thus based on information that is available by the scanning, e.g. the data item type, timestamps of the data item and the size of the data item.

Then, the method proceeds to the next step 523 wherein an initial set of intermediate commands is generated based on the classification step 522, e.g. COPY_NEW, COPY, COPY_METADATA, DELETE, REPLACE, EXCLUDE, VERIFY, COPY_WORM. Also, other parameters needed for the execution of the commands are provided. These commands are then further forwarded to the next step 524 wherein the intermediate commands are updated based on the retrieved status records 510. For example, when there is no command generated for a data item, then a REPAIR is generated if there is no status record or if there is a status record that is not IN_SYNC. Also, the COPY_METADATA is converted to a REPAIR command if there is no status record or the status record is not IN_SYNC.

Fig. 6 illustrates steps performed during step 205 when encountering a REPAIR command. As described above, such a command is issued when a status record is to be reconstructed, for example when there is no previous status record available. This will also be done to avoid scenarios where someone tampered with the destination and forged the modification timestamp for example. The reason that such REPAIR item may be necessary is that data items that are in sync after step 522 are only based on the timestamps in the scan results, e.g. the 'last modification time' of a file system. It is however possible to create a data item that is in sync based on the information available in step 522, but has still different content. In order to verify this, the content would have to be verified by means of a digest and all metadata associated with the data item would have to be checked. By the REPAIR command, such mismatch can be detected and repaired, i.e. the data item will be synchronized even if step 522 identified it as being in sync. In a first step 601, the VERIFY command is ran wherein the data items on both source and destination are compared, both in terms of content as in terms of the metadata. If the result of the VERIFY command is that the data item is completely in sync, with the exception of the destination change time, it will generate a result 602 that will update the current status record to the current verified situation during the merge step 208. If there is a mismatch detected, then a COPY 603 or COPY_METADATA 604 command is issued to bring the data item in sync with the source. The result 602 of this command will then be used in step 208 to update the status record. By comparing the destination change timestamp with the destination change timestamp in the data record, it can be verified that the data item is still synchronized without doing any further time consuming verification commands.

When performing a first synchronization, i.e. the base of initial synchronization, the destination storage system 120 will normally have no data items, and there will be no status list 209. During such an initial synchronization, the steps of Fig. 2 may be performed without the scanning 202 of the destination storage system 202 and without having any status records 210 during the generation 203 of the commands 204. With only this information available, the generated commands will mostly be COPY_NEW commands. As shown in Table 4, this command will trigger the creation of a new status record for the status list 209. As a result, the initial synchronization will result in an initial copy of data items from source to destination and in the generation of the status list with the respective status records. During a next incremental synchronization, a full synchronization will be performed.

Alternatively, when performing a first synchronization, there might already be data items present on the destination storage system 120. These data items may for example be the result of a previously failed data migration attempt. During such an initial synchronization, the steps of Fig. 2 may be performed with the scanning 200, 202 of both the source and destination but without having any status records 210 during the generation 203 of the commands 204. The difference with the previously described clean initial synchronization is that the command layer 523 may report that certain data items are already in sync while there is no status record associated to them. This situation will then be detected by the status layer 524 which will add a REPAIR command for this data item as further described with reference to Fig. 6. As a result, the initial synchronization will result in an initial copy of data items from source to destination that were not already present but will keep the data items intact that were already present on the destination. Further, a status list with the respective status records is generated. During a next incremental synchronization, a full synchronization will be performed. In other words, the so-performed synchronization results in a bootstrapping of the data migration.

During the final cutover synchronization, the steps of Fig. 2 may again be performed including the updating of the status list 209. The status list 209 then forms a report of the data migration that may be used for verifying any later problems about the migrated content.

During the final cutover synchronization, the data items that need to protected from further changes may have a write once ready many, WORM, state assigned to them. This may be done based on the final status list 209 whereby the relevant data items are identified from this list it is verified whether the data item on the destination has not been altered. Then, the WORM state is updated for these data items on the destination storage thereby rendering them immutable.

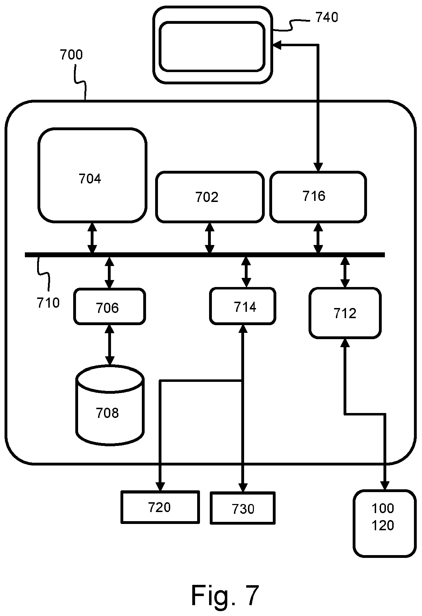

The steps as described above may be performed a suitable computing system or controller that has access to the source and destination storage system. To this end, the steps may be performed from within storage system 100 or 120. The execution of the commands according to step 205 may further be performed in parallel by different computing systems to speed up the execution of the commands. Fig. 7 shows a suitable computing system 700 enabling to implement embodiments of the method for improving blocking effect avoidance in a wireless access node according to the invention. Computing system 700 may in general be formed as a suitable general-purpose computer and comprise a bus 710, a processor 702, a local memory 704, one or more optional input interfaces 714, one or more optional output interfaces 716, a communication interface 712, a storage element interface 706, and one or more storage elements 708. Bus 710 may comprise one or more conductors that permit communication among the components of the computing system 700. Processor 702 may include any type of conventional processor or microprocessor that interprets and executes programming instructions. Local memory 704 may include a random-access memory (RAM) or another type of dynamic storage device that stores information and instructions for execution by processor 702 and/or a read only memory (ROM) or another type of static storage device that stores static information and instructions for use by processor 702. Input interface 714 may comprise one or more conventional mechanisms that permit an operator or user to input information to the computing device 700, such as a keyboard 720, a mouse 730, a pen, voice recognition and/or biometric mechanisms, a camera, etc. Output interface 716 may comprise one or more conventional mechanisms that output information to the operator or user, such as a display 740, etc. Communication interface 712 may comprise any transceiver-like mechanism such as for example one or more Ethernet interfaces that enables computing system 700 to communicate with other devices and/or systems, for example with other computing devices 100, 120. The communication interface 712 of computing system 700 may be connected to such another computing system by means of a local area network (LAN) or a wide area network (WAN) such as for example the internet. Storage element interface 706 may comprise a storage interface such as for example a Serial Advanced Technology Attachment (SATA) interface or a Small Computer System Interface (SCSI) for connecting bus 710 to one or more storage elements 708, such as one or more local disks, for example SATA disk drives, and control the reading and writing of data to and/or from these storage elements 708. Although the storage element(s) 708 above is/are described as a local disk, in general any other suitable computer-readable media such as a removable magnetic disk, optical storage media such as a CD or DVD, -ROM disk, solid state drives, flash memory cards, ... could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method performed while performing a data migration from a source storage system (100) to a destination storage system (120); the method comprising performing an initial synchronization (204, 401), at least one intermediate incremental synchronization (204, 402), and a final cutover synchronization (204, 404) of data items; and wherein the initial synchronization (204, 401) comprises:
- scanning (200) the source and destination storage system thereby obtaining an initial source and destination data item list (201);
- generating (203) commands (204) for performing the initial synchronization based on the scanning;
- executing (205) the commands;
- obtaining (206) results (212) of the executed commands; and
- creating (208) and storing status records (209, 210) of the respective data items indicative for the synchronization state of the respective data items based on the results;
and wherein each of the at least one intermediate incremental synchronizations (204, 402) and the final cutover synchronization (204, 404) comprises:
- scanning (200, 202) the source and destination storage system thereby obtaining the source and destination data item list (201, 211);
- retrieving the stored status records (209, 210) of the respective data items indicative for the last known synchronization state of the respective data items;
- generating (203, 503) commands (204) for performing the intermediate incremental synchronization based on the source and destination data item list (201, 211) and the status records (210);
- executing (205) the commands (204);
- obtaining (206) results (212) of the executed commands as a result list (212);
- determining (206), from the result list, a merge list (207) comprising updates for the status records (209); and
- updating (208) the status records (209) based on the merge list;
and wherein during the final cutover synchronization (204, 404) all access to the data is denied or only read-only access is granted.

2. The method according to claim 1 wherein the status record of a data item comprises:
- a source change timestamp indicative of a moment in time on which the data item was last changed on the source storage system; and
- a destination change timestamp indicative of a moment in time on which the data item was last changed on the destination storage system.

3. The method according to claim 2 wherein the source and destination data item list comprise the change timestamp of the data item in the respective source and destination storage system, and the generating the commands comprises comparing the change timestamp from the data item list with the change timestamp from the status record.

4. The method according to any one of claims 1 to 3 wherein the status record of a data item comprises at least one of:
- a message digest of the data item;
- a size of the data item;
- a type of the data item;
- an owner of the data item;
- access permissions of the data item; and
- retention information of the data item.

5. The method according to any of claims 1 to 4 wherein the status record of a data item comprises a synchronization status selectable from a group comprising:
- a first status option indicative of a valid synchronization of the respective data item; and
- a second status option indicative of a synchronization mismatch of the respective data item.

6. The method according to claim 5 wherein the destination storage system already comprises data items before the data migration; and wherein the performing the initial synchronization further comprises:
- scanning (200, 202) the source and destination storage system thereby obtaining an initial source and initial destination data item list (201, 211);
- generating (203) commands (204) for performing the initial synchronization based on the scanning;
- executing (205) the commands;
- obtaining (206) results (212) of the executed commands; and
- creating (208) the status records with the results.

7. The method according to any of claims 1 to 6, wherein the final cutover synchronization (204, 404) of data items is performed thereby obtaining final status records (209).

8. The method according to claim 7 further comprising a data migration verification step based on the final status records (209).

9. The method according to claim 7 or 8 further comprising:
- obtaining information for protecting one or more of the data items by a write once read many, WORM, state; and
- applying the WORM state to the one or more of the data items on the destination storage system based on the final status records and the data item lists obtained during final cutover synchronization.

10. A controller comprising at least one processor and at least one memory including computer program code, the at least one memory and computer program code configured to, with the at least one processor, cause the controller to perform the method according any of the claims 1 to 9.

11. A computer program product comprising computer-executable instructions which, when the program is executed by a computer, cause the computer to carry out the method according to any of the claims 1 to 9.

12. A computer readable storage medium comprising computer-executable instructions which, when executed by a computer, cause the computer to carry out the method according to any of the claims 1 to 9.

## Patentansprüche

1. Computerimplementiertes Verfahren, das durchgeführt wird, während eine Datenmigration von einem Quellspeichersystem (100) zu einem Zielspeichersystem (120) durchgeführt wird; wobei das Verfahren ein Durchführen einer Anfangssynchronisation (204, 401), mindestens einer inkrementellen Zwischensynchronisation (204, 402) und einer Endumschaltsynchronisation (204, 404) von Datenelementen umfasst; und wobei die Anfangssynchronisation (204, 401) umfasst:
- Scannen (200) des Quell- und des Zielspeichersystems, wodurch eine Anfangsquell- und Zieldatenelementeliste (201) erhalten wird;
- Erzeugen (203) von Befehlen (204) zum Durchführen der Anfangssynchronisation auf der Basis des Scannens;
- Ausführen (205) der Befehle;
- Erhalten (206) von Ergebnissen (212) der ausgeführten Befehle und
- Erzeugen (208) und Speichern von Statusdatensätzen (209, 210) der jeweiligen Datenelemente, die den Synchronisationsstatus der jeweiligen Datenelemente angeben, auf der Basis der Ergebnisse;
und wobei jede von der mindestens einen inkrementellen Zwischensynchronisation (204, 402) und der Endumschaltsynchronisation (204, 404) umfasst:
- Scannen (200, 202) des Quell- und des Zielspeichersystems, wodurch die Quell- und Zieldatenelementeliste (201, 211) erhalten wird;
- Abrufen der gespeicherten Statusdatensätze (209, 210) der jeweiligen Datenelemente, die den letzten bekannten Synchronisationsstatus der jeweiligen Datenelemente angeben;
- Erzeugen (203, 503) von Befehlen (204) zum Durchführen der inkrementellen Zwischensynchronisation auf der Basis der Quell- und Zieldatenelementeliste (201, 211) und der Statusdatensätze (210);
- Ausführen (205) der Befehle (204);
- Erhalten (206) von Ergebnissen (212) der ausgeführten Befehle als eine Ergebnisliste (212);
- Bestimmen (206) einer Fusionsliste (207), die Aktualisierungen für die Statusdatensätze (209) umfasst, aus der Ergebnisliste und
- Aktualisierung (208) der Statusdatensätze (209) auf der Basis der Fusionsliste;
und wobei während der Endumschaltsynchronisation (204, 404) jeglicher Zugriff auf die Daten abgelehnt wird oder nur Nur-Lese-Zugriff gewährt wird.

2. Verfahren nach Anspruch 1, wobei der Statusdatensatz eines Datenelements umfasst:
- einen Quelländerungszeitstempel, der einen Zeitpunkt angibt, zu dem das Datenelement zuletzt in dem Quellspeichersystem geändert wurde; und
- einen Zieländerungszeitstempel, der einen Zeitpunkt angibt, zu dem das Datenelement zuletzt in dem Zielspeichersystem geändert wurde.

3. Verfahren nach Anspruch 2, wobei die Quell- und Zieldatenelementeliste den Änderungszeitstempel des Datenelements in dem jeweiligen Quell- und Zielspeichersystem umfasst und das Erzeugen der Befehle ein Vergleichen des Änderungszeitstempels von der Datenelementeliste mit dem Änderungszeitstempel von dem Statusdatensatz umfasst.

4. Verfahren nach einem der Ansprüche 1 bis 3, wobei der Statusdatensatz eines Datenelements mindestens einen bzw. eine der folgenden umfasst:
- einen Nachrichtendigest des Datenelements;
- eine Größe des Datenelements;
- einen Typ des Datenelements;
- einen Eigentümer des Datenelements;
- Zugriffsberechtigungen für das Datenelement und
- Aufbewahrungsinformationen des Datenelements.

5. Verfahren nach einem der Ansprüche 1 bis 4, wobei der Statusdatensatz eines Datenelements einen Synchronisationsstatus umfasst, der auswählbar ist aus einer Gruppe umfassend:
- einer ersten Statusoption, die eine gültige Synchronisation des jeweiligen Datenelements angibt; und
- einer zweiten Statusoption, die eine Synchronisationsfehlanpassung des jeweiligen Datenelements angibt.

6. Verfahren nach Anspruch 5, wobei das Zielspeichersystem vor der Datenmigration bereits Datenelemente umfasst und wobei das Durchführen der Anfangssynchronisation weiterhin umfasst:
- Scannen (200, 202) des Quell- und des Zielspeichersystems, wodurch eine Anfangsquell- und Anfangszieldatenelementeliste (201, 211) erhalten wird;
- Erzeugen (203) von Befehlen (204) zum Durchführen der Anfangssynchronisation auf der Basis des Scannens;
- Ausführen (205) der Befehle;
- Erhalten (206) von Ergebnissen (212) der ausgeführten Befehle und
- Erzeugen (208) der Statusdatensätze mit den Ergebnissen.

7. Verfahren nach einem der Ansprüche 1 bis 6, wobei die Endumschaltsynchronisation (204, 404) von Datenelementen durchgeführt wird, wodurch Endstatusdatensätze (209) erhalten werden.

8. Verfahren nach Anspruch 7, weiterhin umfassend einen Datenmigrationsverifizierungsschritt auf der Basis der Endstatusdatensätze (209).

9. Verfahren nach Anspruch 7 oder 8, weiterhin umfassend:
- Erhalten von Informationen zum Schützen eines oder mehrerer der Datenelemente durch einen Write-Once-Read-Many-Zustand, WORM-Zustand; und
- Anwenden des WORM-Zustands auf das eine oder die mehreren Datenelemente in dem Zielspeichersystem auf der Basis der Endstatusdatensätze und der Datenelementelisten, die während der Endumschaltsynchronisation erhalten werden.

10. Controller, umfassend mindestens einen Prozessor und mindestens einen Speicher, beinhaltend Computerprogrammcode, wobei der mindestens eine Speicher und der Computerprogrammcode dazu konfiguriert sind, mit dem mindestens einen Prozessor zu bewirken, dass der Controller das Verfahren nach einem der Ansprüche 1 bis 9 durchführt.

11. Computerprogrammprodukt, umfassend computerausführbare Anweisungen, die, wenn das Programm durch einen Computer ausgeführt wird, bewirken, dass der Computer das Verfahren nach einem der Ansprüche 1 bis 9 ausführt.

12. Computerlesbares Speichermedium, umfassend computerausführbare Anweisungen, die bei Ausführung durch einen Computer bewirken, dass der Computer das Verfahren nach einem der Ansprüche 1 bis 9 ausführt.

## Revendications

1. Procédé implémenté sur ordinateur, effectué tout en exécutant une migration de données depuis un système de stockage source (100) vers un système de stockage de destination (120) ; le procédé comprenant l'exécution d'une synchronisation initiale (204, 401), d'au moins une synchronisation incrémentale intermédiaire (204, 402), et d'une synchronisation finale de basculement (204, 404) d'éléments d'information ; et dans lequel la synchronisation initiale (204, 401) comprend les étapes consistant à :
- balayer (200) le système de stockage source et le système de stockage de destination pour ainsi obtenir une liste initiale (201) d'éléments d'information de la source et de la destination ;
- engendrer (203) des commandes (204) pour l'exécution de la synchronisation initiale sur la base du balayage ;
- exécuter (205) les commandes ;
- obtenir (206) les résultats (212) des commandes exécutées ; et
- créer (208) et stocker des enregistrements d'état (209, 210) des éléments d'information respectifs, indicatifs de l'état de synchronisation des éléments d'information respectifs sur la base des résultats ;
et dans lequel chacune de ladite au moins une synchronisation incrémentale intermédiaire (204, 402) et de la synchronisation finale de basculement (204, 404) comprend les étapes consistant à :
- balayer (200, 202) le système de stockage source et le système de stockage de destination pour ainsi obtenir la liste (201, 211) d'éléments d'information de la source et de la destination ;
- récupérer les enregistrements d'état stockés (209, 210) des éléments d'information respectifs, indicatifs du dernier état de synchronisation connu des éléments d'information respectifs ;
- engendrer (203, 503) des commandes (204) pour effectuer la synchronisation incrémentale intermédiaire, sur la base de la liste (201, 211) d'éléments d'information de la source et de la destination et des enregistrements d'état (210) ;
- exécuter (205) les commandes (204) ;
obtenir (206) les résultats (212) des commandes exécutées, sous forme d'une liste de résultats (212) ;
- déterminer (206), d'après la liste de résultats, une liste de synthèse (207) comprenant des actualisations des enregistrements d'état (209) ; et
- actualiser (208) les enregistrements d'état (209) sur la base de la liste de synthèse ;
et dans lequel au cours de la synchronisation finale de basculement (204, 404) tout accès aux données est refusé ou seul un accès en lecture seule est autorisé.

2. Procédé selon la revendication 1, dans lequel l'enregistrement d'état d'un élément d'information comprend :
- une estampille temporelle de modification de source indicative d'un instant dans le temps auquel l'élément d'information a été modifié en dernier sur le système de stockage source ; et
- une estampille temporelle de modification de destination indicative d'un instant dans le temps auquel l'élément d'information a été modifié en dernier sur le système de stockage de destination.

3. Procédé selon la revendication 2, dans lequel la liste d'éléments d'information de la source et de la destination comprend l'estampille temporelle de modification de l'élément d'information dans le système de stockage respectif de la source et de la destination, et le fait d'engendrer les commandes comprend comparer l'estampille temporelle de modification provenant de la liste d'éléments d'information avec l'estampille temporelle de modification provenant de l'enregistrement d'état.

4. Procédé selon l'une quelconque des revendications 1 à 3, dans lequel l'enregistrement d'état d'un élément d'information comprend au moins un parmi :
- un condensé de message de l'élément d'information ;
- une taille de l'élément d'information ;
- un type de l'élément d'information ;
-- un propriétaire de l'élément d'information ;
- des permissions d'accès de l'élément d'information ; et
- des informations de rétention de l'élément d'information.

5. Procédé selon l'une quelconque des revendications 1 à 4, dans lequel l'enregistrement d'état d'un élément d'information comprend un état de synchronisation pouvant être choisi dans un groupe comprenant :
- une première option d'état indicative d'une synchronisation valide de l'élément d'information respectif ; et
- une seconde option d'état indicative d'un mésappariement de synchronisation de l'élément d'information respectif.

6. Procédé selon la revendication 5, dans lequel le système de stockage de destination comprend déjà des éléments d'information avant la migration de données ; et dans lequel l'exécution de la synchronisation initiale comprend en outre les étapes consistant à :
- balayer (200, 202) le système de stockage source et le système de stockage de destination pour ainsi obtenir une liste initiale (201, 211) d'éléments d'information de la source et de la destination ;
- engendrer (203) des commandes (204) pour l'exécution de la synchronisation initiale sur la base du balayage ;
- exécuter (205) les commandes ;
- obtenir (206) les résultats (212) des commandes exécutées ; et
-- créer (208) les enregistrements d'état sur la base des résultats.

7. Procédé selon l'une quelconque des revendications 1 à 6, dans lequel la synchronisation finale de basculement (204, 404) d'éléments d'information est exécutée, pour ainsi obtenir les enregistrements d'état final (209).

8. Procédé selon la revendication 7, comprenant en outre une étape de vérification de migration de données basée sur les enregistrements d'état final (209).

9. Procédé selon la revendication 7 ou 8, comprenant en outre les étapes consistant à :
- obtenir des informations pour protéger un ou plusieurs des éléments d'information par un état d'Écriture une fois/Lecture plusieurs, WORM ; et
- appliquer l'état WORM au(x)dit(s) un ou plusieurs des éléments d'information sur le système de stockage de destination sur la base des enregistrements d'état final et des listes d'éléments d'information obtenues au cours de la synchronisation finale de basculement.

10. Unité de commande, comprenant au moins un processeur et au moins une mémoire incluant un code de programmation informatique, ladite au moins une mémoire et le code de programmation informatique étant configurés pour, à l'aide dudit au moins un processeur, amener l'unité de commande à exécuter le procédé selon l'une quelconque des revendications 1 à 9.

11. Produit programme informatique comprenant des instructions exécutables par ordinateur qui, lorsque le programme est exécuté par un ordinateur, amènent l'ordinateur à effectuer le procédé selon l'une quelconque des revendications 1 à 9.

12. Support de stockage lisible par ordinateur, comprenant des instructions exécutables par ordinateur qui, lorsqu'elles sont exécutées par un ordinateur, amènent l'ordinateur à effectuer le procédé selon l'une quelconque des revendications 1 à 9.
